# EUROPEAN PATENT APPLICATION

(11) **EP 4 284 059 A1**
(43) Date of publication of application: **29.11.2023**
(21) Application number: 21933739.1
(22) Date of filing: 31.03.2021
(51) Int. Cl.: H04W 28/02, H04W 72/12, H04W 28/06

(54) **DATA PROCESSING APPARATUS AND METHOD**

(71) Applicant: Huawei Technologies Co., Ltd., Shenzhen, Guangdong 518129 (CN)
(72) Inventor: LI, Yanbing, Shenzhen, Guangdong 518129 (CN); LIU, Jiwu, Shenzhen, Guangdong 518129 (CN)
(74) Representative: Pfenning, Meinig & Partner mbB
(86) International application number: PCT/CN2021/084391
(87) International publication number: WO 2022/205062

(57) **Abstract**

A data processing method includes: A wireless communication apparatus receives a radio resource control RRC message from a base station, where the RRC message includes a first radio link control RLC configuration field, and the first radio link control RLC configuration field indicates to process RLC data in a sequential delivery manner. The wireless communication apparatus processes the RLC data in an out-of-order delivery manner, where the out-of-order delivery manner is different from the sequential delivery manner indicated by the first radio link control RLC configuration field. Therefore, even though the base station configures the wireless communication apparatus to process the RLC data in the sequential delivery manner, the wireless communication apparatus still processes the RLC data in the out-of-order delivery manner. A complete PDCP PDU carried by an RLC PDU may be directly decrypted, to reduce write once read once, and save DDR bandwidth. In addition, a problem of burst delivery of a large quantity of PDCP PDUs to a PDCP layer in a short time is also avoided, to facilitate implementation.

## Description

### TECHNICAL FIELD

This application relates to the communication field, and more specifically, to a data processing apparatus and method.

### BACKGROUND

In a communication process, in a process in which a radio link control (Radio link control, RLC) layer delivers an RLC protocol data unit (Protocol data unit, PDU) in an out-of-order delivery mode, in comparison with a sequential delivery mode, a complete packet data convergence protocol (Packet data convergence protocol, PDCP) PDU carried by an RLC PDU may be directly decrypted, to reduce write once read once, and save double data rate (Double data rate, DDR) bandwidth. In addition, a phenomenon of burst delivery of a large quantity of PDCP PDUs carried by the RLC PDU to a PDCP layer in a short time during sequential delivery processing is also avoided. Furthermore, delivering, in the out-of-order delivery mode, the PDCP PDU carried by the RLC PDU is easier to implement than delivering, in the sequential delivery mode, the PDCP PDU carried by the RLC PDU.

Therefore, a data packet processing method is needed, so that the PDCP PDU carried by the RLC PDU can be processed in the out-of-order delivery mode even if obtained configuration information is that the PDCP PDU is delivered in the sequential delivery mode, and delivery accuracy is improved.

### SUMMARY

This application provides a data processing method and apparatus, so that a wireless communication apparatus can locally process RLC data in an out-of-order delivery manner even if the wireless communication apparatus is configured to process the RLC data in a sequential delivery manner, and delivery accuracy is improved.

According to a first aspect, a data processing method is provided. The method includes: A wireless communication apparatus receives a radio resource control (Radio resource control, RRC) message from a base station, where the RRC message includes a first radio link control RLC configuration field, and the first RLC configuration field indicates to process RLC data in a sequential delivery manner. The wireless communication apparatus processes the RLC data in an out-of-order delivery manner, where the out-of-order delivery manner is different from the sequential delivery manner indicated by the first RLC configuration field.

It should be understood that, in the out-of-order delivery mode, when an RLC PDU that carries a complete PDCP PDU is received, the complete PDCP PDU is reassembled and delivered. When the RLC PDU carries segmented PDCP PDUs, the RLC PDU may be buffered in a buffer. If the RLC PDU and an adj acent RLC PDU may be reassembled into a complete PDCP PDU, the PDCP PDU is delivered after reassembly. The RLC PDU may be an acknowledged mode data protocol data unit (Acknowledged mode data protocol data unit, AMD PDU) or an unacknowledged mode data protocol data unit (Unacknowledged mode data protocol data unit, UMD PDU).

It should be further understood that, in the foregoing sequential delivery mode, PDCP PDUs carried by received RLC PDUs are sequentially delivered based on an SN of the RLC PDU. In addition, if an RLC PDU carries segmented PDCP PDUs, the segmented PDCP PDUs and a PDCP PDU carried by an adjacent RLC PDU may be reassembled into a complete PDCP PDU, and then the complete PDCP PDU is delivered.

It should be further understood that the wireless communication apparatus may directly process the RLC data in the out-of-order delivery manner when the wireless communication apparatus does not receive the RRC message from a base station, and process RLC data in the out-of-order delivery manner.

Generally, when the wireless communication apparatus receives the RRC message indicating to process the RLC data in the sequential delivery manner, the wireless communication apparatus may process the RLC data in the sequential delivery manner, and deliver the processed RLC data in the sequential delivery manner. However, according to the foregoing solution, when the wireless communication apparatus receives the RRC message from the base station, and the RRC message includes the first RLC configuration field indicating to process the RLC data in the sequential delivery manner, the wireless communication apparatus processes the RLC data in the out-of-order delivery manner instead of in the sequential delivery manner based on an indication of the RRC message. The out-of-order delivery manner is different from the sequential delivery manner indicated by the first RLC configuration field. That is, when the RLC PDU that carries the complete PDCP PDU is received, the complete PDCP PDU is delivered. If the RLC PDU carries the segmented PDCP PDUs, the RLC PDU may be buffered in the buffer. When the RLC PDU and the adj acent RLC PDU may be reassembled into the complete PDCP PDU, the PDCP PDU is delivered after the reassembly. Therefore, the complete PDCP PDU carried by the RLC PDU may be directly decrypted, to reduce write once read once, and save DDR bandwidth. In addition, a phenomenon of burst delivery of a large quantity of PDCP PDUs to a PDCP layer in a short time is also avoided, to facilitate implementation.

With reference to the first aspect, in some implementations of the first aspect, that the first RLC configuration field indicates to process RLC data in a sequential delivery manner includes: The first RLC configuration field does not carry an RLC out-of-order delivery field, where the RLC out-of-order delivery field indicates to process the RLC data in the out-of-order delivery manner.

In an existing protocol, the first RLC configuration field may carry the RLC out-of-order delivery field, that is, an "rlc-OutOfOrderDelivery-r15" field, to indicate to process the RLC data in the out-of-order delivery manner. When the first RLC configuration field carries the field, the first RLC configuration field indicates to process the RLC data in the out-of-order delivery manner. When the first RLC configuration field does not carry the field, the first RLC configuration field indicates to process the RLC data in the sequential delivery manner.

According to the foregoing solution, the first RLC configuration field in the RRC message does not carry the RLC out-of-order delivery field, to indirectly indicate the wireless communication apparatus to process the RLC data in the sequential delivery manner.

In addition, the first RLC configuration field may carry a field that indicates RLC sequential delivery, or the first RLC configuration field may carry a field that indicates that RLC out-of-order delivery is not used, to indicate to process the RLC data in the sequential delivery manner. This is not limited in this application.

With reference to the first aspect, in some implementations of the first aspect, the RRC message further includes a packet data convergence protocol PDCP configuration field, the PDCP configuration field and the first RLC configuration field indicate that one PDCP entity corresponds to one RLC entity, and the method further includes: The wireless communication apparatus uses a PDCP reordering function.

In the existing protocol, the RRC message may include an "rlc-BearerConfigSecondary-r15" field, to indicate that one PDCP entity corresponds to two RLC entities. When the RRC message does not include the foregoing field, the RRC message indicates that one PDCP entity corresponds to one RLC entity.

Generally, in the sequential delivery manner, the PDCP layer does not use the reordering function. A field in the RRC message may indicate that one PDCP entity corresponds to one RLC entity, and indicate that the wireless communication apparatus does not use the PDCP reordering function. However, according to the foregoing solution, even if the wireless communication apparatus receives the RRC message indicating not to use PDCP reordering, in the out-of-order delivery manner, because an RLC layer does not use the reordering function, even if the wireless communication apparatus receives the RRC message, the PDCP reordering function is still used to complete out-of-order delivery. In this way, an out-of-order phenomenon of a data packet received by an application layer can be improved.

With reference to the first aspect, in some implementations of the first aspect, that the PDCP configuration field and the first RLC configuration field indicate that one PDCP entity corresponds to one RLC entity includes: The RRC message does not carry a second RLC configuration field.

According to the foregoing solution, the second RLC configuration field may not be carried in the RRC message, to indicate that one PDCP entity corresponds to one RLC entity. The second RLC configuration field indicates that one PDCP entity corresponds to two RLC entities.

In another possible implementation, a third RLC configuration field may be carried in the RRC message, to indicate that one PDCP entity corresponds to one RLC entity. The third RLC configuration field indicates that one PDCP entity does not correspond to two RLC entities.

With reference to the first aspect, in some implementations of the first aspect, the RRC message is an RRC connection reconfiguration message or an RRC connection re-establishment message.

With reference to the first aspect, in some implementations of the first aspect, the wireless communication apparatus maintains a plurality of pieces of hyper frame number HFN data, where the plurality of pieces of HFN data are used to enable processing of the RLC data in the out-of-order delivery manner.

According to the foregoing solution, the plurality of pieces of HFN data may be maintained, so that the wireless communication apparatus is enabled to process the RLC data in the out-of-order delivery manner.

With reference to the first aspect, in some implementations of the first aspect, the plurality of pieces of HFN data correspond to one data radio bearer DRB, and each of the plurality of pieces of HFN data includes HFN data, and PDCP sequence number data and RLC sequence number data that correspond to the HFN data.

With reference to the first aspect, in some implementations of the first aspect, a PDCP sequence number size of a window indicated by the PDCP configuration field is 12 bits, and the method further includes: The wireless communication apparatus maintains at least one window having a PDCP sequence number greater than 12 bits, and the at least one window having the PDCP sequence number greater than 12 bits is used to enable the PDCP reordering function.

According to the foregoing solution, when the RLC layer processes the RLC data in the out-of-order delivery mode, and delivers the RLC data in the out-of-order delivery mode, the PDCP layer needs to use the reordering function. In this case, if the PDCP sequence number size of the window is not appropriate, complete RLC data may not be received. Therefore, the wireless communication apparatus needs to better enable the PDCP reordering function by maintaining at least one window having a PDCP sequence number of a larger bit.

According to a second aspect, a data processing apparatus is provided. The apparatus includes: a receiving module, configured to receive an RRC message from a base station, where the RRC message includes a first RLC configuration field, and the first RLC configuration field indicates to process RLC data in a sequential delivery manner; and a processing module, configured to process the RLC data in an out-of-order delivery manner, where the out-of-order delivery manner is different from the sequential delivery manner indicated by the first RLC configuration field.

For beneficial effects brought by the foregoing data processing apparatus, refer to the detailed descriptions of the first aspect. For brevity, details are not described herein again.

With reference to the second aspect, in some implementations of the second aspect, that the first RLC configuration field indicates to process RLC data in a sequential delivery manner includes:

The first RLC configuration field does not carry an RLC out-of-order delivery field, where the RLC out-of-order delivery field indicates to process the RLC data in the out-of-order delivery manner.

For beneficial effects brought by the foregoing data processing apparatus, refer to the detailed descriptions of the first aspect. For brevity, details are not described herein again.

With reference to the second aspect, in some implementations of the second aspect, the RRC message further includes a PDCP configuration field, and the PDCP configuration field and the first RLC configuration field indicate that one PDCP entity corresponds to one RLC entity. The processing module is further configured to use a PDCP reordering function.

For beneficial effects brought by the foregoing data processing apparatus, refer to the detailed descriptions of the first aspect. For brevity, details are not described herein again.

With reference to the second aspect, in some implementations of the second aspect, that the PDCP configuration field and the first RLC configuration field indicate that one PDCP entity corresponds to one RLC entity includes: The RRC message does not carry a second RLC configuration field.

With reference to the second aspect, in some implementations of the second aspect, the RRC message is an RRC connection reconfiguration message or an RRC connection re-establishment message.

With reference to the second aspect, in some implementations of the second aspect, the processing module is further configured to: maintain a plurality of pieces of hyper frame number HFN data, where the plurality of pieces of HNF data are used to enable processing of the RLC data in the out-of-order delivery manner.

For beneficial effects brought by the foregoing data processing apparatus, refer to the detailed descriptions of the first aspect. For brevity, details are not described herein again.

With reference to the second aspect, in some implementations of the second aspect, the plurality of pieces of HFN data correspond to one DRB, and each of the plurality of pieces of HFN data includes HFN data, and PDCP sequence number data and RLC sequence number data that correspond to the HFN data.

With reference to the second aspect, in some implementations of the second aspect, a PDCP sequence number size of a window indicated by the PDCP configuration field is 12 bits. The processing module is further configured to maintain at least one window having a PDCP sequence number greater than 12 bits, where the at least one window having the PDCP sequence number greater than 12 bits is used to enable the PDCP reordering function.

For beneficial effects brought by the foregoing data processing apparatus, refer to the detailed descriptions of the first aspect. For brevity, details are not described herein again.

According to a third aspect, a communication apparatus is provided. The communication apparatus includes a processor. The processor is coupled to a memory, and may be configured to execute instructions in the memory, to implement the data processing method in any one of the first aspect and the possible implementations of the first aspect. Optionally, the communication apparatus further includes the memory. Optionally, the communication apparatus further includes a communication interface, the processor is coupled to the communication interface, and the communication interface is configured to input and/or output information. The information includes at least one of instructions and data.

In an implementation, the communication apparatus is a terminal device. When the communication apparatus is the terminal device, the communication interface may be a transceiver, or an input/output interface.

In another implementation, the communication apparatus is a chip or a chip system. When the communication apparatus is the chip or the chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system configured in the terminal device.

According to a fourth aspect, a communication apparatus is provided. The communication apparatus includes a processor. The processor is coupled to a memory, and may be configured to execute instructions in the memory, to implement the data processing method in any one of the first aspect and the possible implementations of the first aspect. Optionally, the communication apparatus further includes the memory. Optionally, the communication apparatus further includes a communication interface, the processor is coupled to the communication interface, and the communication interface is configured to input and/or output information. The information includes at least one of instructions and data.

In an implementation, the communication apparatus is a network device. When the communication apparatus is the network device, the communication interface may be a transceiver, or an input/output interface.

In another implementation, the communication apparatus is a chip or a chip system. When the communication apparatus is the chip or the chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system configured in the network device.

According to a fifth aspect, a computer-readable storage medium is provided. The computer-readable storage medium stores a computer program, and when the computer program is executed by a communication apparatus, the communication apparatus is enabled to implement the data packet processing method in any one of the first aspect or the possible implementations of the first aspect.

According to a sixth aspect, a computer program product including instructions is provided. When the instructions are executed by a computer, a communication apparatus is enabled to implement the data packet processing method provided in the first aspect.

According to a seventh aspect, a chip is provided. The chip stores a computer program, and when the computer program is executed by a communication apparatus, the communication apparatus is enabled to implement the data packet processing method in any one of the first aspect and the possible implementations of the first aspect.

According to an eighth aspect, a communication system is provided. The communication system includes the foregoing network device and the foregoing terminal device.

### BRIEF DESCRIPTION OF DRAWINGS

FIG. 1 is a schematic diagram of a wireless communication system 100 applicable to an embodiment of this application;
FIG. 2 is a schematic diagram of a wireless communication system 200 applicable to an embodiment of this application;
FIG. 3 is a schematic diagram of a user plane protocol stack system 300 applicable to an embodiment of this application;
FIG. 4 is a schematic diagram of delivering an RLC PDU in a sequential delivery mode applicable to an embodiment of this application;
FIG. 5 is a schematic diagram of a PDCP count value applicable to an embodiment of this application;
FIG. 6 is a schematic diagram of calculating a PDCP count value applicable to an embodiment of this application;
FIG. 7 is another schematic diagram of calculating a PDCP count value applicable to an embodiment of this application;
FIG. 8 is another schematic diagram of calculating a PDCP count value applicable to an embodiment of this application;
FIG. 9 is a schematic diagram of transferring a PDCP PDU applicable to an embodiment of this application;
FIG. 10 is a schematic flowchart of a data processing method 1000 according to an embodiment of this application;
FIG. 11 is a schematic diagram of a data delivery method according to an embodiment of this application;
FIG. 12 is a schematic diagram of a preset maximum change range according to an embodiment of this application;
FIG. 13 is a schematic block diagram of a communication apparatus according to an embodiment of this application;
FIG. 14 is a schematic block diagram of a communication apparatus according to an embodiment of this application;
FIG. 15 is a schematic block diagram of a communication apparatus according to an embodiment of this application; and
FIG. 16 is a schematic block diagram of a communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a 5th generation (5th generation, 5G) system, an NR (New radio) system, a long term evolution (long term evolution, LTE) system, an LTE frequency division duplex (frequency division duplex, FDD) system, an LTE time division duplex (time division duplex, TDD) system, a universal mobile communications system (universal mobile telecommunications system, UMTS), or the like.

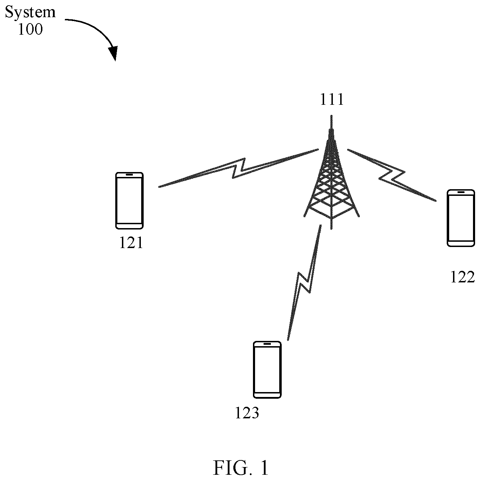

FIG. 1 is a schematic diagram of a wireless communication system 100 applicable to an embodiment of this application. As shown in FIG. 1, the wireless communication system 100 may include at least one network device, for example, a network device 111 shown in FIG. 1. The wireless communication system 100 may further include at least one terminal device, for example, a terminal device 121 to a terminal device 123 shown in FIG. 1. A plurality of antennas may be configured for both the network device and the terminal device, and the network device and the terminal device may communicate with each other by using a multi-antenna technology.

When the network device communicates with the terminal device, the network device may manage one or more cells, and there may be an integer quantity of terminal devices in one cell. Optionally, the network device 111 and the terminal device 121 to the terminal device 123 form a single-cell communication system. Without loss of generality, a cell is denoted as a cell #1. The network device 111 may be a network device in the cell #1, in other words, the network device 111 may serve a terminal device (for example, the terminal device 121) in the cell #1.

It should be noted that, the cell may be understood as an area within a coverage area of a radio signal of the network device.

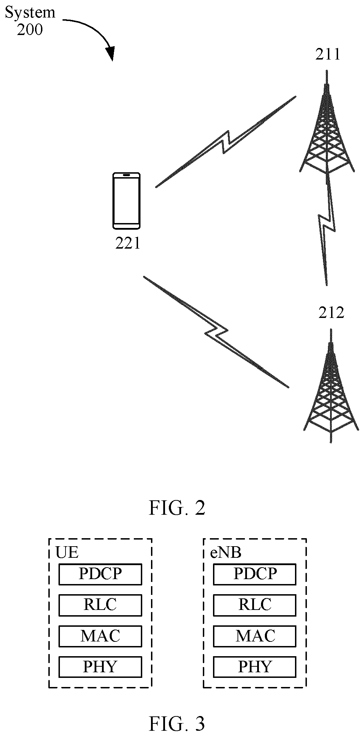

FIG. 2 is a schematic diagram of a wireless communication system 200 applicable to an embodiment of this application. As shown in FIG. 2, the wireless communication system 200 may include a terminal device, for example, a terminal device 221 in FIG. 2. The wireless communication system 200 may further include a plurality of network devices, for example, a network device 211 and a network device 212 in FIG. 2. The terminal device 221 in FIG. 2 may communicate with the network device 221 and the network device 212 at the same time. In other words, the network device 211 and the network device 212 may jointly provide a service for the terminal device 221.

When the network device communicates with the terminal device, the network device may manage one or more cells, and there may be an integer quantity of terminal devices in one cell. Optionally, the network device 111 and the terminal device 121 to the terminal device 123 form a single-cell communication system. Without loss of generality, a cell is denoted as a cell #1. The network device 111 may be a network device in the cell #1, in other words, the network device 111 may serve a terminal device (for example, the terminal device 121) in the cell #1.

It should be noted that, the cell may be understood as an area within a coverage area of a radio signal of the network device.

It should be understood that FIG. 1 and FIG. 2 are merely examples for description, and this application is not limited thereto.

It should be understood that the network device in the wireless communication system may be any device having a wireless transceiver function. The device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home NodeB (for example, a home evolved NodeB, or a home NodeB, HNB), a baseband unit (Baseband Unit, BBU), an access point (Access Point, AP) in a wireless fidelity (Wireless Fidelity, Wi-Fi) system, a wireless relay node, a wireless backhaul node, a transmission point (transmission point, TP), or a transmission reception point (transmission reception point, TRP); may be a gNB or a transmission point (a TRP or a TP) in a 5G system such as an NR system, or one antenna panel or a group of antenna panels (including a plurality of antenna panels) of a base station in the 5G system; or may be a network node, for example, a baseband unit (BBU) or a distributed unit (distributed unit, DU), that forms a gNB or a transmission point.

In some deployments, the gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually changed into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

FIG. 3 is a schematic diagram of a user plane protocol stack system 300 applicable to an embodiment of this application. As shown in FIG. 3, user equipment (User equipment, UE) mainly includes a packet data convergence protocol (Packet data convergence protocol, PDCP) layer, a radio link control (Radio link control, RLC) layer, a media access control (Media access control, MAC) layer, and a port physical layer (Physical layer, PHY). An eNB mainly includes the PDCP layer, the RLC layer, the MAC layer, and the PHY layer. A main function of the PDCP layer includes header compression, encryption/decryption, sorting, duplication detection, and the like. A main function of the RLC layer includes data packet segmentation/reassembling, error correction, and the like.

For ease of understanding embodiments of this application, the following first briefly describes several terms used in this application.

### 1. Service data unit and protocol data unit

A service data unit (Service data unit, SDU) one-to-one corresponds to a protocol data unit (Protocol data unit, PDU) at an upper layer. Data that is not processed and that enters each sublayer is referred to as the service data unit (SDU). Data that is processed by the sublayer and that forms a specific format is referred to as the protocol data unit (PDU). In addition, a PDU formed at a current layer is an SDU at a lower layer. The protocol data unit is sent to a specified layer at a receive end based on different data in the protocol data unit.

### 2. Radio link control layer

The radio link control (Radio Link Control, RLC) protocol layer is a radio link control protocol in a wireless communication system such as a GPRS system/a WCDMA system/a TD-SCDMA system/an LTE system. The RLC layer is located above a MAC layer and is a part of L2. The RLC layer provides services of segmentation and retransmission for user data and control data. Each RLC entity is configured by RRC and has three modes based on a service type: a transparent mode (Transparent mode, TM), an unacknowledged mode (Unacknowledged mode, UM), and an acknowledged mode (acknowledged mode, AM).

The RLC layer is located between the PDCP layer and the MAC layer. The radio link control layer communicates with the PDCP layer through a service access point (Service access point, SAP) and communicates with the MAC layer through a logical channel. Each logical channel of each UE has one RLC entity. Data received by the RLC entity from the PDCP layer or data sent to the PDCP layer is referred to as an RLC SDU (or a PDCP PDU). Data received by the RLC entity from the MAC layer or data sent to the MAC layer is referred to as an RLC PDU (or a MAC SDU).

### 3. Packet data convergence protocol layer

The packet data convergence protocol layer is responsible for performing IP header compression to reduce bit traffic that is necessarily transmitted through a radio interface. The packet data convergence protocol layer belongs to a second layer of a radio interface protocol stack and processes a radio resource control (RRC) message on a control plane. A PDCP sublayer provides a signaling transmission service for an upper RRC layer, implements encryption and consistency protection for RRC signaling, and implements decryption and consistency check for the RRC signaling in an opposite direction.

### 4. Hyper frame number

A PDCP count value used for integrity protection and encryption includes an HFN and a PDCP SN that correspond to a data packet. A purpose of using the hyper frame number is to limit a quantity of bits of a sequence number transmitted on an air interface. Certainly, HFN synchronization needs to be maintained between a terminal device and a network device.

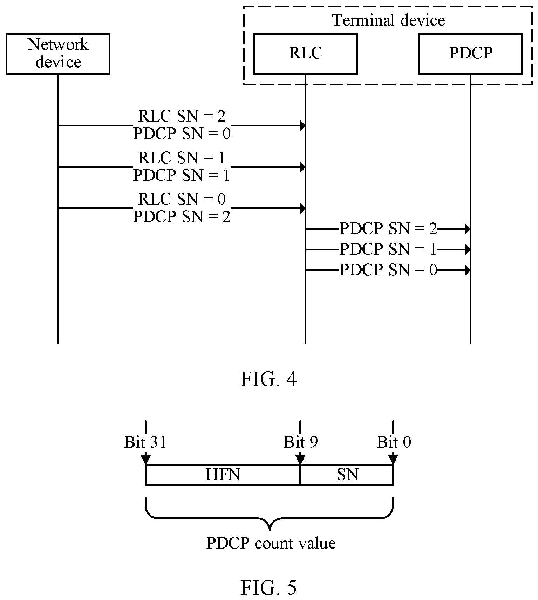

FIG. 4 is a schematic diagram of delivering a PDCP PDU carried by an RLC PDU in a sequential delivery mode. As shown in FIG. 4, when a network device configures an RLC layer of a terminal device to perform sequential delivery, a PDCP layer does not perform reordering processing. Because the terminal device performs the reordering processing at the RLC layer, after receiving a PDU having an RLC SN of 2, the terminal device buffers the PDU at the RLC layer. After receiving a PDU having an RLC SN of 1, the terminal device also buffers the PDU at the RLC layer. Until the RLC layer receives a PDU having an RLC SN of 0, the RLC layer delivers the PDCP PDU to the PDCP layer in an order of the RLC SN. The PDCP layer is configured not to perform the reordering processing. Therefore, a PDU having a PDCP SN of 0 and a PDU having a PDCP SN of 1 may be discarded.

FIG. 5 is a schematic diagram of a PDCP count value. The PDCP count value includes an HFN and an SN. As shown in FIG. 5, the PDCP count value of a 10-bit SN includes a 22-bit HFN and a 10-bit SN. A PDCP PDU carries only the SN. UE, an eNB, or a gNB obtains the HFN by using an algorithm specified in a protocol, and combines the HFN and the SN based on the foregoing structure to calculate the PDCP count value.

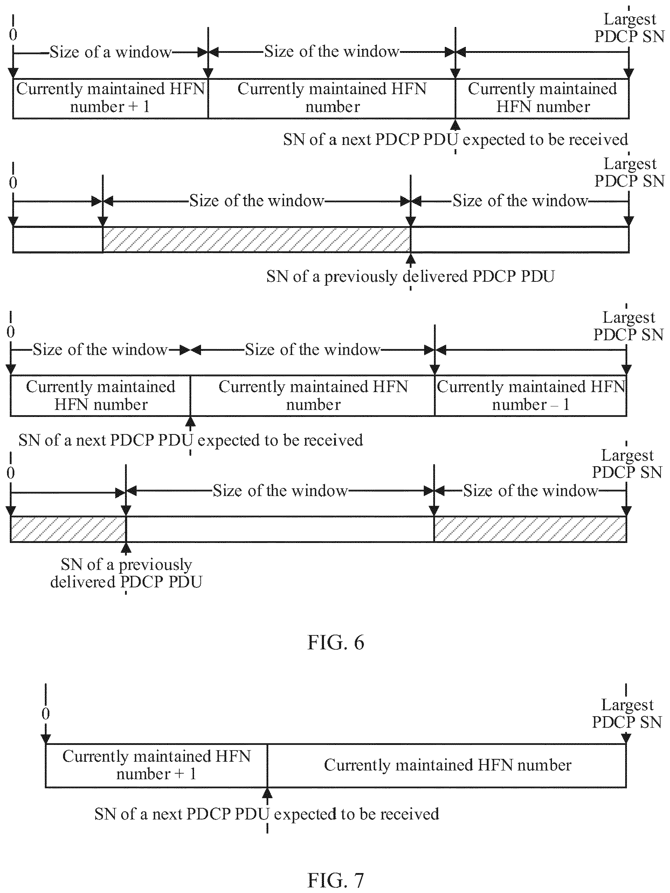

FIG. 6 is a schematic diagram of calculating a PDCP count value. As shown in FIG. 6, it is assumed that a size of a PDCP SN is a downlink PDCP SN bit size. In this case, a size of a reordering window is equal to 2^{Downlink PDCP SN bit size - 1}. After a PDCP PDU is received, if an SN of the PDCP PDU falls into a shadow part in FIG. 6, the PDCP PDU is discarded. If the SN of the PDCP PDU falls into an interval of adding 1 to or subtracting 1 from a currently maintained HFN in FIG. 6, the HFN of the PDCP PDU is set to a corresponding value. Finally, the PDCP count value is calculated by using the HFN value corresponding to the PDCP PDU and the SN corresponding to the PDCP PDU.

FIG. 7 is another schematic diagram of calculating a PDCP count value. As shown in FIG. 7, it is assumed that a size of a PDCP SN is a quantity of bits of the PDCP in downlink transmission. In this case, a size of a reordering window is equal to 2^{Downlink PDCP SN bit size - 1}. After a PDCP PDU is received, if an SN of the PDCP PDU falls into different intervals in FIG. 7, an HFN of the PDCP PDU is set to a corresponding value. Finally, the PDCP count value is calculated by using the HFN value corresponding to the PDCP PDU and the SN corresponding to the PDCP PDU.

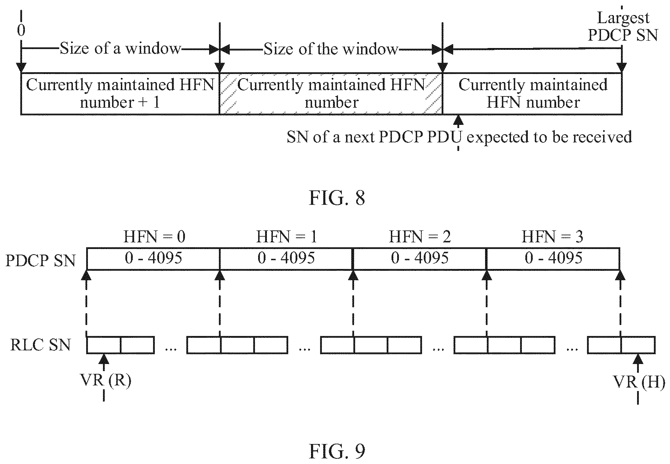

FIG. 8 is another schematic diagram of calculating a PDCP count value. As shown in FIG. 8, it is assumed that a size of a PDCP SN is a quantity of bits of the PDCP in downlink transmission. In this case, a size of a window is equal to 2^{Downlink PDCP SN bit size - 1}. After a PDCP PDU is received, if an SN of the PDCP PDU falls into a shadow part in FIG. 8, the PDCP PDU is discarded. If the SN of the PDCP PDU falls into different intervals in FIG. 8, an HFN of the PDCP PDU is set to a corresponding value. Finally, the PDCP count value is calculated by using the HFN value corresponding to the PDCP PDU and the SN corresponding to the PDCP PDU.

In the two processes of calculating the PDCP count value in FIG. 4 and FIG. 6, only one current HFN can be maintained, and only an operation of adding 1 to or subtracting 1 from the currently maintained HFN can be performed for an HFN of a PDCP PDU received by the PDCP layer.

FIG. 9 is a schematic diagram of transferring a PDCP PDU. As shown in FIG. 9, when a size of an RLC SN and a size of a PDCP SN are not appropriately configured (for example, the size of the RLC SN is configured as 10 bits, and the size of the PDCP SN is configured as 12 bits), there may be a PDCP PDU having more than two HFN values in an RLC receive window. When an RLC layer works in an out-of-order delivery mode, PDCP count values of some PDCP PDUs may be incorrectly calculated based on the foregoing three methods for calculating the PDCP count value.

In addition, in an existing protocol, when a device receives an RRC message indicating to process RLC data in a sequential delivery manner, the device may process the RLC data in the sequential delivery manner, and deliver processed RLC data in the sequential delivery manner.

Specifically, when an RLC configuration field included in the RRC message does not include an RLC out-of-order delivery field, that is, the RLC configuration field does not include an "rlc-OutOfOrderDelivery" field, it indicates that RRC information indicates to process the RLC data in the sequential delivery manner. After receiving the RRC information, the device processes the RLC data in the sequential delivery manner based on the RRC information. In addition, in the sequential delivery manner, a PDCP layer does not use a reordering function. However, in the RRC information, whether the PDCP layer uses the reordering function may be implicitly indicated by indicating a correspondence between a PDCP entity and an RLC entity. For example, when one PDCP entity corresponds to one RLC entity, the PDCP layer does not use the reordering function. When one PDCP entity corresponds to two RLC entities, the PDCP layer uses the reordering function. Further, when the RRC message includes an "rlc-BearerConfigSecondary-r15" field, it indicates that one PDCP entity corresponds to two RLC entities. In this case, the PDCP layer uses the reordering function. When the foregoing field is not included, it indicates that one PDCP entity does not correspond to two RLC entities. In this case, the PDCP layer does not use the reordering function.

In conclusion, after the device receives the RRC information indicating to process the RLC data in the sequential delivery manner, the device processes the RLC data in the sequential delivery manner. This may cause burst delivery of a large quantity of RLC data by the RLC layer to the PDCP layer in a short time. In addition, if the device processes the RLC data in the out-of-order delivery manner, the PDCP count value may be incorrectly calculated. Therefore, a data processing method is needed to resolve the foregoing problem.

It should be understood that, in the following embodiments, to avoid loss of generality, a first device may be a wireless communication apparatus, and a second device may be a network device.

It should be further understood that, in the following embodiments, to avoid loss of generality, an RLC PDU may be an AMD PDU, or may be a UMD PDU. This is not limited in this application.

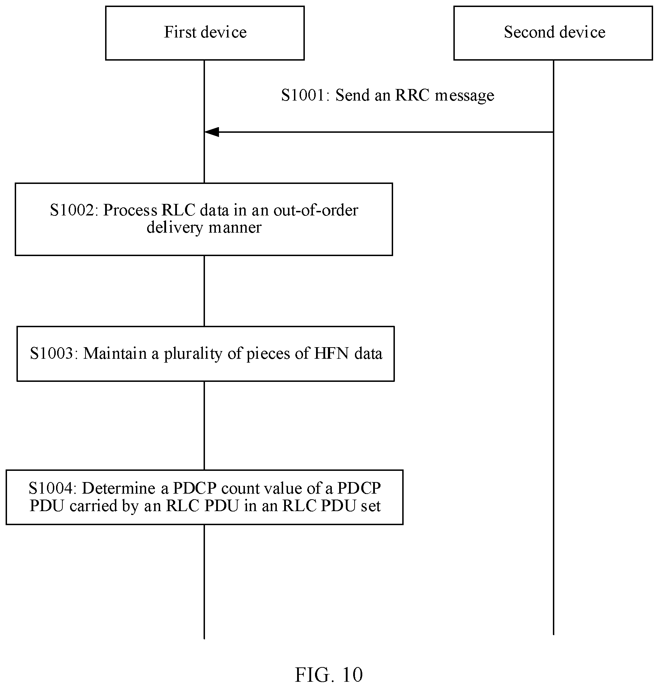

An embodiment of this application provides a schematic flowchart of a data processing method 1000. As shown in FIG. 10, the method 1000 includes the following steps.

S1001: A second device sends an RRC message to a first device.

For example, the second device may send the RRC message to the first device, where the RRC message includes a first RLC configuration field, and the first RLC configuration field indicates the first device to process the RLC data in a sequential delivery manner. Further, the RRC message may be an RRC connection reconfiguration message or an RRC connection re-establishment message.

Specifically, the second device may send the RRC message to the first device, where the RRC message includes the first RLC configuration field that indicates the first device to process the RLC data in the sequential delivery manner. Further, the first RLC configuration field may not carry a field that indicates to process the RLC data in an out-of-order delivery manner, to indirectly indicate to process the RLC data in the sequential delivery manner. Optionally, the first RLC configuration field may not carry the "rlc-OutOfOrderDelivery-r15" field, to be specific, a field that indicates a wireless communication apparatus to process the RLC data in the out-of-order delivery manner, to indirectly indicate the wireless communication apparatus to process the RLC data in the sequential delivery manner. The out-of-order delivery manner is different from the sequential delivery manner indicated by the first RLC configuration field.

In addition, the first RLC configuration field may alternatively carry a field that indicates RLC sequential delivery, or the first RLC configuration field may carry a field that indicates that RLC out-of-order delivery is not used, to indicate the first device to process the RLC data in the sequential delivery manner. This is not limited in this application.

Further, in the sequential delivery manner, the first device does not use a PDCP reordering function. Therefore, the RRC message further includes a PDCP configuration field. The PDCP configuration field and the first RLC configuration field indicate the first device not to use PDCP reordering.

Specifically, the RRC message may include the PDCP configuration field and the first RLC configuration field, and does not include a second RLC configuration field, to indicate that one PDCP entity corresponds to one RLC entity, and indirectly indicate the first device not to use the PDCP reordering. The second RLC configuration field may indirectly indicate, by indicating that one PDCP entity corresponds to two RLC entities, the first device to use the PDCP reordering. Further, the second RLC configuration field may be "rlc-BearerConfigSecondary-r15". Therefore, when the RRC message does not include the second RLC configuration field that indirectly indicates the first device to use the PDCP reordering function, the RRC message may indicate the first device not to use the PDCP reordering function.

In addition, a third RLC configuration field may be carried in the RRC message, to indicate that one PDCP entity corresponds to one RLC entity. The third RLC configuration field indicates that one PDCP entity does not correspond to two RLC entities.

Further, when a PDCP sequence number size of a window indicated by the PDCP configuration field is 12 bits, the first device may maintain at least one window having a PDCP sequence number greater than 12 bits, and the at least one window having the PDCP sequence number greater than 12 bits is used to enable the PDCP reordering function.

Specifically, to avoid a phenomenon that a configured PDCP SN of a window is excessively small, a PDCP SN size of the window may be set to 15 bits or 18 bits, to resolve a problem that reordering cannot be better supported for a larger range of PDCP count values when the PDCP SN size of the window is not appropriately configured and a PDCP layer enables reordering.

It should be understood that when the PDCP sequence number size of the window indicated by the PDCP configuration field is 18 bits, the PDCP SN size of the window does not need to be changed.

The PDCP SN size of the window is set to 18 bits. This can resolve the problem that reordering cannot be better supported for a larger range of PDCP count values when the PDCP SN size of the window is not appropriately configured and the PDCP layer enables reordering.

It should be understood that, in the foregoing solution, the sequential delivery manner may be: PDCP PDUs carried by RLC PDUs are sequentially delivered based on an SN of the RLC PDU in a received RLC PDU set. In addition, if an RLC PDU carries segmented PDCP PDUs, the segmented PDCP PDUs and a PDCP PDU carried by an adjacent RLC PDU may be reassembled into a complete PDCP PDU, and then the complete PDCP PDU is delivered. The out-of-order delivery manner may be: When an RLC PDU that carries a complete PDCP PDU is received, the complete PDCP PDU is reassembled and delivered. When the RLC PDU carries segmented PDCP PDUs, the RLC PDU may be buffered in a buffer. If the RLC PDU and an adjacent RLC PDU may be reassembled into a complete PDCP PDU, the PDCP PDU is delivered after reassembly.

S 1002: The first device processes the RLC data in the out-of-order delivery manner.

For example, after receiving the RRC message sent by the second device, the first device may process the RLC data in the out-of-order delivery manner.

Specifically, for example, when an RLC layer of the first device receives an RLC PDU whose SN is 2 and that carries a PDCP PDU having an SN of 0, the RLC layer may deliver the carried PDCP PDU having the SN of 0 to the PDCP layer. When the RLC layer receives an RLC PDU whose SN is 1 and that carries a PDCP PDU having an SN of 1, the RLC layer may deliver the carried PDCP PDU having the SN of 1 to the PDCP layer. A mode in which the two RLC PDUs are buffered at the RLC layer, and then the PDCP PDUs carried by the RLC PDUs are sequentially delivered based on a sequence of an SN of the RLC PDU is not used.

It should be understood that, after receiving the RRC message, the first device may process the RLC PDU in the RLC PDU set in the out-of-order delivery manner. Alternatively, when there is no RRC message, the RLC PDU in the RLC PDU set may be processed in the out-of-order delivery manner. This is not limited in this application.

According to the foregoing solution, when the first device receives the RRC message including the first RLC configuration field that indicates to process the RLC data in the sequential delivery manner, that is, the first device is not indicated to process the RLC data in the out-of-order delivery manner, the first device still processes the RLC data in the out-of-order delivery manner, to be specific, when receiving the RLC PDU that carries the complete PDCP PDU, the first device delivers the complete PDCP PDU. In addition, if the RLC PDU carries the segmented PDCP PDUs, the RLC PDU may be buffered in the buffer. When the RLC PDU and the adjacent RLC PDU may be reassembled into the complete PDCP PDU, the PDCP PDU is delivered after the reassembly. Therefore, the complete PDCP PDU carried by the RLC PDU may be directly decrypted, to reduce write once read once, and save DDR bandwidth. In addition, in comparison with the sequential delivery manner, a phenomenon of burst delivery of a large quantity of PDCP PDUs to the PDCP layer in a short time is also avoided, to facilitate implementation.

Further, the first device may use the PDCP reordering, so that the PDCP layer reorders received PDCP PDUs.

Generally, after the first device receives the RRC message that indirectly indicates that the PDCP reordering is not used, that is, the RRC message does not include the second RLC configuration field, and does not carry a field indicating that one PDCP entity corresponds to two RLC entities, the first device does not perform the PDCP reordering. However, in this embodiment, even if the first device receives the RRC message indicating that the PDCP reordering is not used, the first device still uses the PDCP reordering. Therefore, when the RLC layer does not perform the reordering, the PDCP layer performs a reordering operation, so that a phenomenon of out-of-order of data packets received by an application layer can be improved.

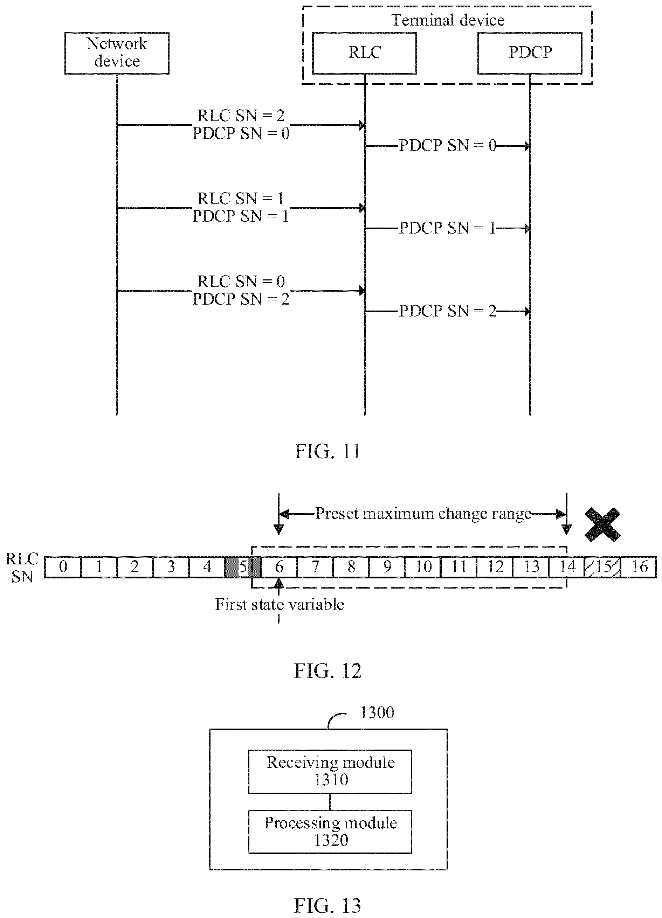

Specifically, when the first device delivers, in an out-of-order mode, the PDCP PDU carried by the RLC PDU in the RLC PDU set, the RLC layer does not perform the reordering. Therefore, in this case, the PDCP layer needs to perform the reordering. FIG. 11 is a schematic diagram of a data delivery method according to an embodiment of this application. As shown in FIG. 11, when the following RLC PDUs all belong to an RLC PDU set, a first device receives an RLC PDU whose SN is 2 and that carries a PDCP PDU having an SN of 0, and then delivers the carried PDCP PDU to a PDCP layer. When an RLC PDU whose SN is 1 and that carries a PDCP PDU having an SN of 1 is received, the carried PDCP PDU is delivered to the PDCP layer. In addition, when an RLC PDU whose SN is 0 and that carries a PDCP PDU having an SN of 2 is received, the carried PDCP PDU is delivered to the PDCP layer. Then, a PDCP reordering function is used for processing, that is, PDCP PDUs whose SN sequence numbers are in an ascending order are obtained.

It should be understood that, in this embodiment, regardless of whether the RRC message indicates that one PDCP entity corresponds to one RLC entity or one PDCP entity corresponds to two RLC entities, the first device uses the PDCP reordering.

According to the foregoing solution, after the first device receives an RRC message indicating not to use the PDCP reordering, that is, indicates that one PDCP entity corresponds to one RLC entity, the PDCP reordering is used instead of being not used. Therefore, when the RLC layer does not perform the reordering, the PDCP layer performs a reordering operation, so that a phenomenon of out-of-order of data packets received by an application layer can be improved.

S1003: The first device maintains a plurality of pieces of HFN data.

For example, the first device may maintain the plurality of pieces of HFN data, where the plurality of pieces of HFN data are used to enable processing of the RLC data in the out-of-order delivery manner. Further, the plurality of pieces of HFN data correspond to one DRB, and each of the plurality of pieces of HFN data includes HFN data, and PDCP sequence number data and RLC sequence number data that correspond to the HFN data.

For example, the first device may determine a parameter of an HFN node in a target queue based on the RLC PDU in the RLC PDU set, and a parameter of each HFN node in the target queue may include:
a start SN and an end SN of the PDCP, a start SN and an end SN of the RLC, and an HFN number.

Specifically, the first device may determine a parameter of the node in the target queue based on at least one parameter in a parameter set. The parameter set includes at least one of the following parameters: an SN of a t^{th} RLC PDU, an SN of a PDCP PDU carried by the t^{th} RLC PDU, a count value (RX_DELIV) of a PDCP SDU that is not delivered in a PDCP window and that is still waiting for delivery, and a preset parameter. For ease of understanding, the t^{th} RLC PDU is any RLC PDU in the RLC PDU set, the preset parameter is an SN size of the PDCP window, and the parameter may be a configured parameter.

In a possible implementation, when the target queue is an empty queue, an HFN number of the PDCP PDU carried by the t^{th} RLC PDU is determined based on at least one parameter included in the parameter set, and a node is newly added to the target queue. It is determined that an HFN number of the newly added node is the HFN number of the PDCP PDU carried by the t^{th} RLC PDU, a start SN of a PDCP of the newly added node is 0, and an end SN of the PDCP of the newly added node is the SN of the PDCP PDU carried by the t^{th} RLC PDU, and both a start SN and an end SN of RLC of the newly added node is the SN of the t^{th} RLC PDU.

In another possible implementation, when the target queue has at least one node, determining is performed based on the SN of the t^{th} RLC PDU and the start SN and the end SN of the RLC of the node in the target sequence, and a parameter of the node in the target queue is determined based on a determining result and the parameter set.

For example, when the determining result is that the SN of the t^{th} RLC PDU is between a start SN and an end SN of RLC of a tail node in the target queue, when a first preset condition is met, a node is newly added after the tail node in the target queue, and a parameter of the newly added node is determined based on the parameter set and an HFN number of the tail node in the target queue. The first preset condition is that the SN of the PDCP PDU carried by the t^{th} RLC PDU is less than an end SN of a PDCP of the tail node in the target queue, and a difference between the end SN of the PDCP of the tail node in the target queue and the SN of the PDCP PDU carried by the t^{th} RLC PDU is greater than 2^{Preset parameter - 1}.

Further, it is determined that the end SN of the PDCP of the newly added node is the SN of the PDCP PDU carried by the t^{th} RLC PDU, both the start SN and the end SN of the RLC of the newly added node are the SN of the t^{th} RLC PDU, and the HFN number of the newly added node is the HFN number of the tail node in the target queue + 1.

For example, when the determining result is that the SN of the t^{th} RLC PDU is between the start SN and the end SN of the RLC of the tail node in the target queue, when the first preset condition is not met, it is determined that the end SN of the RLC of the tail node in the target queue is the SN of the t^{th} RLC PDU. When the SN of the PDCP PDU carried by the t^{th} RLC PDU is greater than the end SN of the PDCP of the tail node in the target queue, it is determined that the end SN of the PDCP of the tail node in the target queue is the SN of the PDCP PDU carried by the t^{th} RLC PDU.

For example, when the determining result is that the SN of the t^{th} RLC PDU is not between the start SN and the end SN of the RLC PDU of the tail node in the target queue, when the SN of the t^{th} RLC PDU is less than the start SN of the RLC PDU of the tail node in the target queue, it is determined that the start SN of the RLC of the tail node in the target queue is the SN of the t^{th} RLC PDU.

For example, when the determining result is that the SN of the t^{th} RLC PDU is greater than an end SN of an RLC PDU of an n^{th} node in the target queue, and the n^{th} node is not the tail node, when a second preset condition is met, determining is performed based on the SN of the t^{th} RLC PDU and a start SN of an RLC PDU of an (n+1)^{th} node in the target sequence. If the SN of the t^{th} RLC PDU is greater than the start SN of the RLC PDU of the (n+1)^{th} node in the target queue, and the SN of the t^{th} RLC PDU is less than a value of a first state variable, a next node of the node is selected for determining. The second preset condition is that the SN of the t^{th} RLC PDU is greater than the end SN of the RLC PDU of the (n+1)^{th} node in the target queue, and the SN of the t^{th} RLC PDU is less than the value of the first state variable.

For example, when the determining result is that the SN of the t^{th} RLC PDU is greater than the end SN of the RLC PDU of the n^{th} node in the target queue, and the n^{th} node is not the tail node, when the first preset condition and the second preset condition are not met, it is determined that the end SN of the RLC of the n^{th} node in the target queue is the SN of the t^{th} RLC PDU. When the SN of the PDCP PDU carried by the t^{th} RLC PDU is greater than the end SN of the PDCP of the n^{th} node in the target queue, it is further determined that the end SN of the PDCP of the n^{th} node in the target queue is the SN of the PDCP PDU carried by the t^{th} RLC PDU.

For example, when the determining result is that the SN of the t^{th} RLC PDU is greater than the end SN of the RLC PDU of the n^{th} node in the target queue, and the n^{th} node is not the tail node, when the first preset condition is met but the second preset condition is not met, it is determined that the start SN of the RLC of the (n+1)^{th} node in the target queue is the SN of the t^{th} RLC PDU. When the SN of the PDCP PDU carried by the t^{th} RLC PDU is greater than the end SN of the PDCP of the (n+1)^{th} node in the target queue, it is determined that the end SN of the PDCP of the (n+1)^{th} node in the target queue is the SN of the PDCP PDU carried by the t^{th} RLC PDU.

For example, when the determining result is that the SN of the t^{th} RLC PDU is equal to or less than the end SN of the RLC PDU of the n^{th} node in the target queue, and the n^{th} node is not the tail node, when the SN of the t^{th} RLC PDU is greater than the start SN of the RLC PDU of the n^{th} node in the target queue, it is determined that the start SN of the RLC of the n^{th} node in the target queue is the SN of the t^{th} RLC PDU.

S1004: The first device determines a PDCP count value of the PDCP PDU carried by the RLC PDU in the RLC PDU set.

For example, after determining the parameter of the node in the target queue, the first device may determine, based on the parameter of the node of the target queue corresponding to the RLC PDU in the RLC PDU set and the SN of the PDCP PDU carried by the RLC PDU in the RLC PDU set, the PDCP count value of the PDCP PDU carried by the RLC PDU in the RLC PDU set.

Specifically, the first device may move the HFN number of the node in the target queue corresponding to the RLC PDU in the RLC PDU set to a high-order bit, and perform an OR operation on the HFN number and the SN of the PDCP PDU carried by the RLC PDU in the RLC PDU set, to determine the PDCP count value of the PDCP PDU carried by the RLC PDU in the RLC PDU set.

For example, the first device may move the HFN number of the node in the target queue corresponding to the t^{th} RLC PDU to a high-order bit, and perform an OR operation on the HFN number and the SN of the PDCP PDU carried by the t^{th} RLC PDU, to determine the PDCP count value of the PDCP PDU carried by the t^{th} RLC PDU.

According to the foregoing solution, the HFN node in the target queue is introduced, and parameter information of each HFN node in the target queue is determined based on the RLC PDU in the RLC PDU set. The parameter information of each HFN node includes: a start SN and an end SN of a PDCP, a start SN and an end SN of RLC, and an HFN number. Finally, the HFN number of the HFN node in the target queue corresponding to the RLC PDU in the RLC PDU set is moved to the high-order bit, and the OR operation is performed on the HFN number and the SN of the PDCP PDU carried by the RLC PDU in the RLC PDU set, to determine the PDCP count value of the PDCP PDU carried by the RLC PDU in the RLC PDU set. Therefore, a problem that the PDCP count value is incorrectly calculated caused in an out-of-order delivery process can be avoided, and accuracy of calculating the PDCP count value is improved.

It should be understood that, in the foregoing solution, the SN of the RLC PDU in the RLC PDU set fall within a first SN range, the first SN range is determined based on the first state variable VR (H) or VR (UH) and a second state variable VR (R) or VR (UR), and the first state variable indicates an SN of an RLC PDU next to an RLC PDU corresponding to a highest sequence number SN that is currently received in an RLC window, the second state variable indicates an SN value of an RLC PDU next to the last AMD PDU that has been received in sequence in the RLC window or an SN value of an earliest UMD PDU that is considered to be reordered, where a change of the first state variable falls within a preset maximum change range. FIG. 12 is a schematic diagram of a preset maximum change range according to an embodiment of this application. As shown in FIG. 12, the preset maximum change range of a first state variable is limited to 8. In this case, the preset maximum change range of the first state variable falls within a range of an SN of 6 to 14, so that a jump of the first state variable cannot reach a range of a value of the SN that is greater than 14.

Further, the preset maximum change range may be determined based on a size of a PDCP window and a quantity of PDCP PDUs carried by an RLC PDU in an RLC PDU set. For example, the preset maximum change range may be a ratio of the size of the PDCP window to the quantity of PDCP PDUs carried by the RLC PDU in the RLC PDU set. The size of the PDCP window is determined based on an SN size of the PDCP window.

The preset maximum change range is determined, to be specific, the preset maximum change range is determined based on the PDCP SN size of the window and the quantity of PDCP PDUs carried by the RLC PDU in the RLC PDU set, so that the preset maximum change range can be limited, the preset maximum change range does not exceed a range of the PDCP window, and a problem that a PDCP count value is incorrectly calculated because a jump range of the first state variable is excessively large is avoided.

It may be understood that in the foregoing method embodiments, the method and the operation implemented by the terminal device may be implemented by a component (for example, a chip or a circuit) that can be used in the terminal device, and the method and the operation implemented by the network device may be implemented by a component (for example, a chip or a circuit) that can be used in the network device.

The foregoing describes in detail the method provided in embodiments of this application with reference to FIG. 10 to FIG. 12. The following describes in detail a communication apparatus provided in embodiments of this application with reference to FIG. 11 to FIG. 14. It should be understood that descriptions of apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element, for example, a transmit end device or a receive end device, includes a corresponding hardware structure and/or software module for performing each function. A person skilled in the art should be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmit end device or the receive end device may be divided into functional modules based on the foregoing method examples. For example, the transmit end device or the receive end device may be divided into functional modules based on corresponding functions, or two or more functions may be integrated into one processing module. The integrated module may be implemented in a form of hardware, or may be implemented in a form of a software functional module. It should be noted that, module division in embodiments of this application is an example, is merely logical function division, and may be other division in actual implementation. An example in which each functional module is obtained through division based on each corresponding function is used below for description.

FIG. 13 is a schematic block diagram of a communication apparatus according to an embodiment of this application. The communication apparatus 1300 includes a receiving module 1310 and a processing module 1320. The receiving module 1310 may implement a corresponding communication function, and the processing module 1310 is configured to process data. The receiving module 1310 may also be referred to as a communication interface or a communication module.

Optionally, the communication apparatus 1300 may further include a storage module. The storage module may be configured to store instructions and/or data. The processing module 1320 may read the instructions and/or the data in the storage module, to enable the communication apparatus to implement the foregoing method embodiments.

The communication apparatus 1300 may be configured to perform an action performed by the first device in the foregoing method embodiments. In this case, the communication apparatus 1300 may be the first device or a component that can be configured in the first device. The receiving module 1310 is configured to perform a receiving-related operation on a first device side in the foregoing method embodiments. The processing module 1320 is configured to perform a processing-related operation on the first device side in the foregoing method embodiments.

Alternatively, the communication apparatus 1300 may be configured to perform an action performed by the second device in the foregoing method embodiments. In this case, the communication apparatus 1300 may be the second device or a component that can be configured in the second device. The receiving module 1310 is configured to perform a receiving and sending-related operation on a second device side in the foregoing method embodiments. The processing module 1320 is configured to perform a processing-related operation on the second device side in the foregoing method embodiments.

In a design, the communication apparatus 1300 is configured to perform an action performed by the first device in the embodiment shown in FIG. 10. The receiving module 1310 is configured to perform S1001. The processing module 1320 is configured to perform S1002 to S1004.

The communication apparatus 1300 may implement a step or a procedure performed by the first device in the method 1000 in embodiments of this application. The communication apparatus 1300 may include a module configured to perform the method performed by the first device in the method 1000 in FIG. 10. In addition, the modules in the communication apparatus 1300 and the foregoing other operations and/or functions are respectively used to implement corresponding procedures of the method 1000 in FIG. 10.

When the communication apparatus 1300 is the first device configured to perform the method 1000 in FIG. 10, the receiving module 1310 may be configured to perform step 1001 in the method 1000, and the processing module 1320 may be configured to perform steps 1002 to 1004 in the method 1000.

It should be understood that a specific process of performing the foregoing corresponding step by each module is described in detail in the foregoing method embodiments. For brevity, details are not described herein again.

In another design, the communication apparatus 1300 is configured to perform an action performed by the second device in the embodiment shown in FIG. 10. The receiving module 1310 is configured to perform S1001.

The communication apparatus 1300 may implement a step or a procedure performed by the second device in the method 1000 in embodiments of this application. The communication apparatus 1300 may include a module configured to perform the method performed by the second device in the method 1000 in FIG. 10. In addition, the modules in the communication apparatus 1300 and the foregoing other operations and/or functions are used to implement corresponding procedures of the method 1000 in FIG. 10.

When the communication apparatus 1300 is configured to perform the method 1000 in FIG. 10, the receiving module 1310 may be configured to perform step 1001 in the method 1000.

The processing module 1320 in the foregoing embodiment may be implemented by at least a processor, a multi-core processor, a processing core, or a processor-related circuit. The receiving module 1310 may be implemented by a receiver, a transceiver, or a receiver-related circuit. The receiving module 1310 may also be referred to as a communication module or a communication interface. The storage module may be implemented by at least one memory.

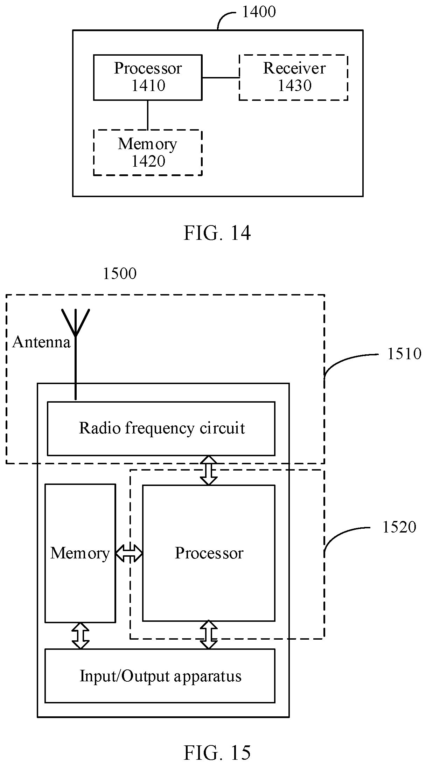

As shown in FIG. 14, an embodiment of this application further provides a communication apparatus 1400. The communication apparatus 1400 includes a processor 1410. The processor 1410 is coupled to a memory 1420. The memory 1420 is configured to store a computer program or instructions and/or data. The processor 1410 is configured to perform the computer program or the instructions and/or the data stored in the memory 1420, so that the method in the foregoing method embodiments is performed.

Optionally, the communication apparatus 1400 includes one or more processors 1410.

Optionally, as shown in FIG. 14, the communication apparatus 1400 may further include the memory 1420.

Optionally, the communication apparatus 1400 may include one or more memories 1420.

Optionally, the memory 1420 may be integrated with the processor 1410, or may be disposed separately.

Optionally, as shown in FIG. 14, the communication apparatus 1400 may further include a transceiver 1430. The transceiver 1430 is configured to receive and/or send a signal. For example, the processor 1410 is configured to control the transceiver 1430 to receive and/or send the signal.

In a solution, the communication apparatus 1400 is configured to implement an operation performed by the first device in the foregoing method embodiments.

For example, the processor 1410 is configured to implement a processing-related operation performed by the first device in the foregoing method embodiments, and the transceiver 1430 is configured to implement a receiving and sending-related operation performed by the first device in the foregoing method embodiments.

In another solution, the communication apparatus 1400 is configured to implement an operation performed by the second device in the foregoing method embodiments.

For example, the processor 1410 is configured to implement a processing-related operation performed by the second device in the foregoing method embodiments, and the transceiver 1430 is configured to implement a receiving and sending-related operation performed by the second device in the foregoing method embodiments.

An embodiment of this application further provides a communication apparatus 1500. The communication apparatus 1500 may be a first device or a chip. The communication apparatus 1500 may be configured to perform an operation performed by the first device in the foregoing method embodiments.

When the communication apparatus 1500 is the first device, FIG. 15 is a simplified schematic structural diagram of the first device. As shown in FIG. 15, the first device includes a processor, a memory, a radio frequency circuit, an antenna, and an input/output apparatus. The processor is mainly configured to: process a communication protocol and communication data, control the first device, perform a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display screen, or a keyboard, is mainly configured to receive data entered by a user and output data to the user. It should be noted that, some types of first devices may not have the input/output apparatus.

When data needs to be sent, after performing a baseband processing on the to-be-sent data, the processor outputs a baseband signal to the radio frequency circuit. After performing radio frequency processing on the baseband signal, the radio frequency circuit sends the radio frequency signal in a form of an electromagnetic wave through an antenna. When data is sent to the first device, the radio frequency circuit receives the radio frequency signal through the antenna, converts the radio frequency signal into the baseband signal, and outputs the baseband signal to the processor. The processor converts the baseband signal into data, and processes the data. For ease of description, FIG. 15 shows only one memory and one processor. In an actual first device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a receiving and sending function may be considered as a receiving module of the first device, and the processor that has a processing function may be considered as a processing module of the first device.

As shown in FIG. 15, a terminal device includes a receiving module 1510 and a processing module 1520. The receiving module 1510 may also be referred to as a receiver, a transceiver, a receiver circuit, a transceiver apparatus, or the like. The processing module 1520 may also be referred to as a processor, a multi-core processor, a processing core, a processing circuit, a processing board, a processing module, a processing apparatus, or the like.

Optionally, a component that is in the receiving module 1510 and that is configured to implement a receiving function may be considered as a receiving module, and a component that is in the receiving module 1510 and that is configured to implement a sending function may be considered as a sending module. In other words, the receiving module 1510 includes the receiving module and the sending module. The receiving module may also be sometimes referred to as a receiver, a transceiver, a receiver circuit, a transceiver apparatus, or the like. The sending module may also be sometimes referred to as a transmitter, a transmitter circuit, or the like.

For example, in an implementation, the processing module 1520 is configured to perform a processing action of the first device in FIG. 10. For example, the processing module 1520 is configured to perform processing steps in steps 1002 to 1004 in FIG. 10. The receiving module 1510 is configured to perform a receiving and sending operation in step 1001 in FIG. 10.

It should be understood that FIG. 15 is merely an example but not a limitation. The first device including the receiving module and the processing module may not depend on the structure shown in FIG. 15.

When the communication apparatus 1500 is the chip, the chip includes the receiving module and the processing module. The receiving module may be an input/output circuit or a communication interface. The processing module may be a processor, a microprocessor, or an integrated circuit integrated on the chip.

An embodiment of this application further provides a communication apparatus 1600. The communication apparatus 1600 may be a second device or a chip. The communication apparatus 1600 may be configured to perform an operation performed by the network device in the foregoing method embodiments.

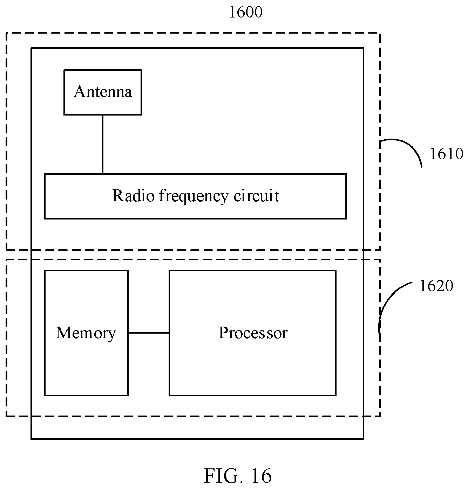

When the communication apparatus 1600 is the second device, for example, a base station. FIG. 16 is a simplified schematic structural diagram of the base station. The base station includes a part 1610 and a part 1620. The part 1610 is mainly configured to: receive and send a radio frequency signal, and perform conversion between a radio frequency signal and a baseband signal. The part 1620 is mainly configured to: process a baseband, control the base station, and the like. The part 1610 may be usually referred to as a transceiver module, a transceiver, a transceiver circuit, a transceiver, or the like. The part 1620 is usually a control center of the base station, may be usually referred to as a processing module, and is configured to control the base station to perform a processing operation on a network device side in the foregoing method embodiments.

A transceiver module in the part 1610 may also be referred to as a transceiver, or the like, and includes an antenna and a radio frequency circuit. The radio frequency circuit is mainly configured to perform a radio frequency processing. Optionally, a component configured to implement a receiving function in the part 1610 may be considered as a receiving module, and a component configured to implement a sending function may be considered as a sending module. In other words, the part 1610 includes the receiving module and the sending module. The receiving module may also be referred to as a receiver, a receiver circuit, or the like, and the sending module may be referred to as a transmitter, a transmitter circuit, or the like.

The part 1620 may include one or more boards, and each board may include one or more processors and one or more memories. The processor is configured to read and execute a program in the memory, to implement a baseband processing function and control the base station. If there is a plurality of boards, the boards may be interconnected with each other, to enhance a processing capability. In an optional implementation, a plurality of boards may share one or more processors, a plurality of boards share one or more memories, or a plurality of boards share one or more processors at the same time.

For example, in an implementation, the transceiver module in the part 1610 is configured to perform a receiving and sending-related step performed by the network device in the embodiment shown in FIG. 4. The part 1620 is configured to perform a processing-related step performed by the network device in the embodiment shown in FIG. 4.

For example, in another implementation, the transceiver module in the part 1610 is configured to perform a receiving and sending-related step performed by the network device in the embodiment shown in FIG. 5. The part 1620 is configured to perform a processing-related step performed by the network device in the embodiment shown in FIG. 5.

It should be understood that FIG. 16 is merely an example but not a limitation. The network device including the transceiver module and the processing module may not depend on the structure shown in FIG. 16.

When the communication apparatus 1600 is the chip, the chip includes the transceiver module and the processing module. The transceiver module may be an input/output circuit or a communication interface. The processing module is a processor, a microprocessor, or an integrated circuit integrated on the chip.

An embodiment of this application further provides a computer-readable storage medium. The computer-readable storage medium stores computer instructions used to implement the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

It may be clearly understood by a person skilled in the art that, for ease and brevity of description, for explanations and beneficial effects of related content in any communication apparatus provided above, refer to the corresponding method embodiment provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, a Windows operating system, or the like. The application layer may include applications such as a browser, an address book, word processing software, and instant messaging software.

A specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a terminal device, a network device, or a functional module that is in the terminal device or the network device and that can invoke and execute the program.

Various aspects or features of this application may be implemented as a method, an apparatus, or a product that uses standard programming and/or engineering technologies. The term "product" used in this specification may cover a computer program that can be accessed from any computer-readable device, carrier, or medium.

A computer-readable storage medium may be any usable medium accessible by a computer, or a data storage device, such as a server or a data center, integrating one or more usable media. The usable medium (or the computer-readable medium) may include, for example, but is not limited to various media that can store program code, such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card and a flash memory device (for example, an erasable programmable read-only memory (erasable programmable read-only memory, EPROM), a card, a stick, or a key drive), or a semiconductor medium (for example, a solid-state disk (solid-state disk, SSD), a USB flash drive, a read-only memory (read-only memory, ROM), or a random access memory (random access memory, RAM)).

Various storage media described in this specification may represent one or more devices and/or other machine-readable media configured to store information. The term "machine-readable medium" may include but is not limited to a radio channel and various other media capable of storing, including, and/or carrying instructions and/or data.

It should be understood that, the processor mentioned in embodiments of this application may be a central processing module (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA, or another programmable logic device, a discrete gate or a transistor logic device, or a discrete hardware component, the memory (a storage module) may be integrated into the processor.

It should be further noted that, the memory described in this specification is intended to include but is not limited to these memories and any other memory of a proper type.

In the several embodiments provided in this application, it should be understood that the disclosed apparatus and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, that is, may be located in one position, or may be distributed on a plurality of network modules. Some or all of the modules may be selected based on an actual requirement to implement the solutions provided in this application.

In addition, functional modules in embodiments of this application may be integrated into one module, or each of the modules may exist alone physically, or two or more modules may be integrated into one module.

All or a part of the foregoing embodiments may be implemented by software, hardware, firmware, or any combination thereof.

When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A data processing method, comprising:
receiving, by a wireless communication apparatus, a radio resource control RRC message from a base station, wherein the RRC message comprises a first radio link control RLC configuration field, and the first RLC configuration field indicates to process RLC data in a sequential delivery manner; and
processing, by the wireless communication apparatus, the RLC data in an out-of-order delivery manner, wherein the out-of-order delivery manner is different from the sequential delivery manner indicated by the first RLC configuration field.

2. The method according to claim 1, wherein that the first RLC configuration field indicates to process RLC data in a sequential delivery manner comprises:
the first RLC configuration field does not carry an RLC out-of-order delivery field, wherein the RLC out-of-order delivery field indicates to process the RLC data in the out-of-order delivery manner.

3. The method according to claim 1 or 2, wherein the RRC message further comprises a packet data convergence protocol PDCP configuration field, the PDCP configuration field and the first RLC configuration field indicate that one PDCP entity corresponds to one RLC entity, and the method further comprises:
using, by the wireless communication apparatus, a PDCP reordering function.

4. The method according to claim 3, wherein that the PDCP configuration field and the first RLC configuration field indicate that one PDCP entity corresponds to one RLC entity comprises:
the RRC message does not carry a second RLC configuration field.

5. The method according to any one of claims 1 to 4, wherein the RRC message is an RRC connection reconfiguration message or an RRC connection re-establishment message.

6. The method according to any one of claims 1 to 5, wherein the method further comprises:
maintaining, by the wireless communication apparatus, a plurality of pieces of hyper frame number HFN data, wherein the plurality of pieces of HFN data are used to enable processing of the RLC data in the out-of-order delivery manner.

7. The method according to claim 6, wherein the plurality of pieces of HFN data correspond to one data radio bearer DRB, and each of the plurality of pieces of HFN data comprises HFN data, and PDCP sequence number data and RLC sequence number data that correspond to the HFN data.

8. The method according to claim 6 or 7, wherein a PDCP sequence number size of a window indicated by the PDCP configuration field is 12 bits, and the method further comprises:
maintaining, by the wireless communication apparatus, at least one window having a PDCP sequence number greater than 12 bits, wherein the at least one window having the PDCP sequence number greater than 12 bits is used to enable the PDCP reordering function.

9. A wireless communication apparatus, comprising:
a receiving module, configured to receive an RRC message from a base station, wherein the RRC message comprises a first RLC configuration field, and the first RLC configuration field indicates to process RLC data in a sequential delivery manner; and
a processing module, configured to process the RLC data in an out-of-order delivery manner, wherein the out-of-order delivery manner is different from the sequential delivery manner indicated by the first RLC configuration field.

10. The apparatus according to claim 9, wherein that the first RLC configuration field indicates to process RLC data in a sequential delivery manner comprises:
the first RLC configuration field does not carry an RLC out-of-order delivery field, wherein the RLC out-of-order delivery field indicates to process the RLC data in the out-of-order delivery manner.

11. The apparatus according to claim 9 or 10, wherein the RRC message further comprises a PDCP configuration field, and the PDCP configuration field and the first RLC configuration field indicate that one PDCP entity corresponds to one RLC entity; and
the processing module is further configured to use a PDCP reordering function.

12. The apparatus according to claim 11, wherein that the PDCP configuration field and the first RLC configuration field indicate that one PDCP entity corresponds to one RLC entity comprises:
the RRC message does not carry a second RLC configuration field.

13. The apparatus according to any one of claims 9 to 12, wherein the RRC message is an RRC connection reconfiguration message or an RRC connection re-establishment message.

14. The apparatus according to any one of claims 9 to 13, wherein the processing module is further configured to:
maintain a plurality of pieces of hyper frame number HFN data, wherein the plurality of pieces of HNF data are used to enable processing of the RLC data in the out-of-order delivery manner.

15. The apparatus according to claim 14, wherein the plurality of pieces of HFN data correspond to one DRB, and each of the plurality of pieces of HFN data comprises HFN data, and PDCP sequence number data and RLC sequence number data that correspond to the HFN data.

16. The apparatus according to claim 14 or 15, wherein a PDCP sequence number size of a window indicated by the PDCP configuration field is 12 bits; and
the processing module is further configured to maintain at least one window having a PDCP sequence number greater than 12 bits, wherein the at least one window having the PDCP sequence number greater than 12 bits is used to enable the PDCP reordering function.

17. A communication apparatus, comprising:
a memory, configured to store computer instructions; and
a processor, configured to execute the computer instructions stored in the memory, to enable the communication apparatus to perform the method according to any one of claims 1 to 8.

18. A computer-readable storage medium, wherein the computer-readable storage medium stores a computer program, and when the computer program is executed by a communication apparatus, the communication apparatus is enabled to perform the method according to any one of claims 1 to 8.

19. A computer program product, wherein the computer program product comprises instructions for performing the method according to any one of claims 1 to 8.

20. A chip, wherein the chip comprises a processor and a data interface, and the processor reads, through the data interface, instructions stored in a memory, to perform the method according to any one of claims 1 to 8.
